# FASCICULE DE BREVET EUROPEEN

(11) **EP 2 112 028 B1**
(45) Date de publication et mention de la délivrance du brevet: **07.03.2012**
(21) Numéro de dépôt: 09158019.1
(22) Date de dépôt: 16.04.2009
(51) Int. Cl.: B60R 19/18, B60R 19/03

(54) **Absorbeur pour véhicule automobile**
Absorber für Kraftfahrzeug
Absorber for automobile

(30) Priorité: 16.04.2008 FR 0852578
(43) Date de publication de la demande: 28.10.2009
(73) Titulaire: COMPAGNIE PLASTIC OMNIUM, 69007 Lyon (FR)
(72) Inventeur: Malteste, Stéphane, 01800 Meximieux (FR); Fayt, Arnold, 01640 Jujurieux (FR)
(74) Mandataire: Potdevin, Emmanuel Eric

(56) Documents cités:
- EP-A2- 0 337 119
- WO-A2-2005/018995
- FR-A1- 2 293 339
- US-A1- 2006 055 187
- US-B1- 6 692 064

## Description

La présente invention concerne un absorbeur de chocs en matière plastique, pour véhicule automobile.

Un véhicule automobile comporte habituellement, dans sa partie avant et/ou dans sa partie arrière, un absorbeur de chocs agencés au droit d'une poutre de choc, destinés à absorber au moins en partie l'énergie due à un impact contre le véhicule automobile.

Un absorbeur de chocs est soumis à de nombreuses exigences en matière de chocs, spécifiques à chaque pays ou région. Certains organismes, comme le RCAR (acronyme anglais pour « Research Council for Automobile Repair »), mettent en place des tests d'absorption normalisés afin d'étudier l'efficacité d'un absorbeur dans le cas de chocs dits « chocs assurance » . Ces tests visent à mesurer le coût des réparations lors d'impacts à basse vitesse (moins de 16 km/h).

Le RCAR a relevé que, lorsqu'un absorbeur d'un véhicule automobile ne se comporte pas de manière adéquate lors d'un choc entre deux véhicules automobiles, la poutre de choc (avant ou arrière) de l'un des véhicules passe généralement au dessus ou en dessous de la poutre de choc (avant ou arrière) de l'autre véhicule, ce qui crée des dommages importants au moins pour l'un des deux véhicules. Ces tests ont été effectués jusqu'ici avec une barrière rigide simulant un obstacle. Or, la trop grande rigidité de la barrière rend mal compte des dégâts causés par les chocs entre deux véhicules où le fait que la partie avant ou l'arrière des deux véhicules soit déformable entraîne des dégâts plus importants que lors des tests.

L'IIHS (acronyme anglais pour « Insurance Institute for Highway Safety »), membre du RCAR, a donc récemment mis en place un test d'absorption utilisant un obstacle déformable, par exemple un absorbeur déformable (« IIHS Deformable barrier Test »), visant à déterminer si l'ensemble poutre de choc/absorbeur d'un véhicule permet d'éviter les dommages au dessus ou en dessous de la poutre de choc en cas d'impact à basse vitesse (inférieure à 16 km/h).

Ce test d'absorption permet notamment de vérifier :
- si la géométrie de la poutre de choc (avant ou arrière) du véhicule permet un recouvrement suffisant avec la poutre de choc (avant ou arrière) d'un autre véhicule avec lequel il rentre en collision,
- si l'ensemble poutre de choc/absorbeur est suffisamment stable par rapport à l'autre véhicule au cours du choc, et enfin
- si l'ensemble poutre de choc/absorbeur présente des propriétés d'absorption de chocs suffisantes pour absorber à lui seul l'énergie du choc.

Si ces critères sont satisfaits, le nombre de pièces à remplacer sur le véhicule automobile après le choc est limité, idéalement à la peau de pare-chocs, à l'absorbeur et à la poutre de choc ayant subit le choc.

Pour simuler la partie avant ou arrière du véhicule tiers impliqué dans le choc, ce test d'absorption utilise une barrière de simulation destinée à rentrer en contact avec le véhicule testé. Cette barrière comprend une partie rigide et une partie déformable de simulation et est positionnée à une hauteur donnée par rapport au sol. Les dimensions d'une telle barrière sont standardisées en fonction du test d'absorption normalisé.

On connaît déjà, de l'état de la technique, un absorbeur en matière plastique destiné à protéger le véhicule lors d'une collision avec un obstacle rigide. Lors d'un test avec barrière déformable, cet absorbeur est monté sur le véhicule de façon à présenter, lors du test de barrière déformable IIHS, une zone, dite de recouvrement, qui se trouve horizontalement en regard de la barrière simulant la partie avant ou arrière d'un autre véhicule avec lequel il rentre en collision et, de manière optionnelle, une zone complémentaire d'absorption d'énergie, située en dessous de la zone de recouvrement, passant en dessous de la barrière lors du choc avec la barrière de simulation.

Lors du choc, la barrière passe au-dessus de la poutre de choc (avant ou arrière) du véhicule, ce qui cause des dommages importants à ce véhicule. C'est notamment le cas pour les véhicules dont la partie avant ou arrière est abaissée par rapport aux véhicules classiques de type berlines, comme les véhicules de type coupés, où le risque de détériorer le capot et les optiques est accru par rapport aux véhicules plus classiques.

On connaît également de l'état de la technique un absorbeur dont la zone optionnelle complémentaire d'absorption est située au-dessus de la zone de recouvrement. Lors du choc, la zone complémentaire passe au-dessus de la barrière. La barrière passe alors au-dessous du véhicule, ce qui cause des dommages importants au dessous de l'absorbeur. C'est notamment le cas pour les véhicules dont l'avant est surélevé par rapport aux véhicules classiques de type berlines, comme pour les véhicules de type 4x4.

De tels absorbeurs sont connus des documents US 6 692 064, FR 2 293 339, EP 0 337 119 et US 2006/0055187.

L'invention a pour but de proposer un absorbeur permettant un meilleur comportement du véhicule lors d'un choc, notamment lors d'un choc réalisé dans le cadre du test d'absorption des chocs à basse vitesse avec barrière déformable IIHS.

L'invention a pour objet un absorbeur selon la revendication 1.
La zone de recouvrement est destinée à s'étendre horizontalement en regard d'une barrière d'un test d'absorption normalisé de chocs à basse vitesse, les dimensions de la barrière étant standardisées conformément au test d'absorption, la barrière comprenant une partie déformable et s'étendant verticalement entre des bords haut et bas.
Dans certains chocs, notamment ceux réalisés lors du test, la moitié de raideur moyenne la plus faible est la moitié la plus proche verticalement d'un bord haut ou bas de la barrière.

On notera que, l'absorbeur est apte à passer avec succès un test d'absorption normalisé prédéterminé. La barrière étant standardisée conformément à ce test d'absorption normalisé prédéterminé, l'homme du métier saura réaliser un tel absorbeur en fonction des dimensions standard de cette barrière, définies par le test d'absorption normalisé. Par exemple, dans le cas d'un test IIHS à barrière déformable, pour un choc frontal, la hauteur de la barrière est standardisée à 457 mm du sol.

L'absorbeur selon l'invention permet d'obtenir un comportement entraînant moins de dommages au véhicule lors d'un choc qu'un absorbeur de l'état de la technique cité en préambule, du fait qu'on évite un échappement de l'absorbeur et d'une poutre de choc (avant ou arrière) vers le haut ou vers le bas.

Par raideur, on fait référence à la propriété selon laquelle une partie de l'absorbeur est capable de se déformer élastiquement et/ou plastiquement et donc d'absorber de l'énergie sous une contrainte donnée. Plus la partie est raide, plus elle est capable d'absorber d'énergie, d'abord par une déformation élastique, puis par déformation plastique.

Par raideur moyenne d'une moitié, on fait référence au rapport de l'énergie absorbée par cette moitié lors du choc sur l'enfoncement de cette partie lors du choc.

Par raideur selon la direction longitudinale, on fait référence à la capacité d'une partie de l'absorbeur à se déformer élastiquement et/ou plastiquement selon une direction sensiblement parallèle à la direction longitudinale.

La raideur moyenne de la moitié de raideur moyenne la plus élevée selon la direction longitudinale permet d'obtenir une réaction plus élevée lors du choc que la réaction de la moitié de raideur moyenne la plus faible dont la raideur moyenne est moindre. Cette différence de réactions dans la zone de recouvrement a pour effet de créer une zone de solidarisation et d'engagement temporaire, lors du choc, entre le véhicule comprenant l'absorbeur selon l'invention et l'autre véhicule avec lequel il rentre en collision, éventuellement modélisé par une barrière de simulation conforme au test IIHS. Ainsi, l'absorbeur selon l'invention permet d'éviter que le véhicule ne s'abaisse ou ne se surélève sous l'effet du choc, du fait d'un basculement de l'absorbeur.

De préférence, la raideur de la moitié de raideur moyenne la plus faible présente une raideur moyenne non nulle.

De manière optionnelle, la moitié de raideur moyenne la plus faible est proéminente vers l'avant du véhicule par rapport à la moitié de raideur moyenne la plus élevée.

De manière optionnelle, l'absorbeur comprend une zone, dite complémentaire, d'absorption d'énergie du choc frontal destinée à s'étendre verticalement au delà du bord haut ou bas de la barrière, de façon à ne pas être en regard de cette barrière.

Dans ce cas, les zones de recouvrement et complémentaire sont adjacentes suivant une direction verticale du véhicule lorsque l'absorbeur est monté sur le véhicule.

On dit que les zones de recouvrement et complémentaire sont adjacentes lorsqu'aucune autre zone d'absorption d'énergie n'est intercalée entre les zones de recouvrement et complémentaire.

Dans le cas où l'absorbeur comporte une zone complémentaire, la moitié de raideur moyenne la plus faible est intercalée entre la zone complémentaire et la moitié de raideur moyenne la plus élevée.

L'absorbeur peut présenter une pluralités de zones réparties selon la direction verticale présentant des raideurs correspondantes selon la direction longitudinale différentes les unes des autres sans pour cela sortir du cadre de l'invention. Ainsi, la moitié de raideur moyenne la plus élevée pourra comprendre certaines zones dont la raideur propre est inférieure à la raideur propre de certaines zones de la moitié de raideur moyenne la plus faible.

Avantageusement, les moitiés sont agencées de façon à dissocier la déformation de chaque moitié selon la direction longitudinale l'une par rapport à l'autre sous l'effet d'un choc.

De plus, la paroi de séparation permet de dissocier la déformation des deux moitiés lors du choc. Ainsi, les moitiés, en raison de leur raideur moyenne respective qui est différente selon la direction longitudinale, peuvent se déformer différemment l'une de l'autre sans que la déformation de l'une n'ait d'influence sur la déformation de l'autre.

Selon une caractéristique optionnelle de l'absorbeur selon l'invention, les moitiés sont séparées par une paroi de dissociation, destinés à dissocier la déformation de chaque moitié sous l'effet du choc, la paroi s'étendant selon une direction sensiblement transversale du véhicule lorsque l'absorbeur est monté sur le véhicule.

Optionnellement, la zone complémentaire est proéminente vers l'avant du véhicule par rapport à au moins à une des moitiés de la zone de recouvrement.

En outre, la zone complémentaire est dimensionnée de sorte que les moitiés et la zone complémentaire soient disposée au droit d'une poutre de choc du véhicule automobile. Optionnellement, la raideur moyenne de la zone complémentaire selon la direction longitudinale est supérieure à la raideur moyenne de la moitié intercalée entre la zone complémentaire et la moitié de raideur moyenne supérieure, selon la direction longitudinale.

Selon une caractéristique de l'absorbeur selon l'invention, chaque moitié comporte au moins une paroi formant nervure apte à absorber l'énergie du choc selon une direction longitudinale lorsque l'absorbeur est monté sur le véhicule.

La raideur moyenne des moitiés peut être ajustée en fonction de l'épaisseur des parois ou bien encore leur orientation. Ainsi, les parois de chaque moitié pourront comporter des épaisseurs différentes. Les parois de la moitié de raideur la plus élevée pourront être plus épaisses que les parois de la moitié de raideur la plus faible.

Avantageusement, la paroi formant nervure de la moitié de raideur moyenne la plus faible présente une dimension selon la direction verticale supérieure à celle de la paroi formant nervure de la moitié de raideur moyenne la plus élevée.

De cette façon, la raideur selon la direction longitudinale du véhicule de la paroi de la moitié de raideur moyenne la plus élevée est supérieure à la raideur selon cette direction longitudinale de la paroi de la moitié de raideur la plus faible.

Avantageusement, la paroi formant nervure de la moitié de raideur moyenne la plus faible comporte au moins un orifice ménagé dans cette paroi.

L'orifice ménagé dans la paroi formant nervure permet d'ajuster la raideur de la nervure, notamment en fonction de la taille de l'orifice et de sa forme.

Il est ainsi facile de réaliser un absorbeur selon l'invention dans lequel les parois formant nervures des moitiés sont d'égales épaisseurs et dans lequel seules les parois formant nervures de la moitié inférieure comportent des orifices.

En variante, les parois formant nervures de la moitié de raideur moyenne la plus élevée comportent également des orifices ménagées dans ces parois. Dans cette variante, les orifices des parois de la moitié de raideur moyenne la plus élevée sont dimensionnés par rapport aux orifices des parois de la moitié de raideur moyenne la plus faible de sorte que la raideur moyenne selon la direction longitudinale des parois de la moitié de raideur moyenne la plus élevée soit supérieure à la raideur moyenne selon cette direction longitudinale des parois de l'autre moitié.

Avantageusement, au moins une moitié, et de préférence les deux, comporte plusieurs parois formant nervures définissant un réseau de parois périodique selon la direction transversale du véhicule, de préférence, la périodicité du réseau des deux moitiés étant sensiblement identique.

Chaque réseau de parois permet d'obtenir des propriétés d'absorption sensiblement égales sur toute la dimension transversale de l'absorbeur pour chaque moitié.

Selon une caractéristique de l'absorbeur selon l'invention, deux parois formant nervures successives selon la direction transversale du véhicule sont reliées entre elles par une paroi transversale et au moins deux parois transversales successives, dites de front et de fond, sont décalées l'une par rapport à l'autre selon la direction longitudinale du véhicule de sorte qu'une paroi de front alterne avec une paroi de fond selon la direction transversale.

Un tel absorbeur favorise l'encastrement du véhicule avec lequel il rentre en collision, éventuellement modélisé par une barrière standardisée de simulation conforme au test d'absorbeur déformable normalisé IIHS. Ainsi, le véhicule comprenant l'absorbeur selon l'invention ne s'abaisse ou ne se surélève pas sous l'effet du choc du fait de l'encastrement ce qui réduit encore davantage les dommages causés au véhicules au dessus ou en dessous de l'absorbeur.

Selon une caractéristique de l'absorbeur selon l'invention, les parois de front et de fond des moitiés sont agencées en damier lorsqu'on regarde l'absorbeur selon une direction longitudinale du véhicule.

Cette caractéristique permet d'obtenir, en plus de l'effet encastrement, une bonne dissociation de la déformation de chacune des moitiés de la zone d'absorption lors du choc et donc un meilleur contrôle de l'échappement de l'absorbeur vers le haut ou vers le bas. En effet, en raison de l'agencement en damier, la déformation, sur une des moitiés, de nervures portant une paroi de front n'entraîne pas la déformation, sur l'autre moitié, de nervures portant une paroi de fond.

L'invention a également pour objet un véhicule automobile conforme à la revendication 10.

De préférence, la zone de recouvrement s'étendant verticalement entre des limites supérieure et inférieure, l'absorbeur est monté sur le véhicule de sorte que la limite inférieure de la zone de recouvrement est située à une hauteur sensiblement supérieure ou égale à 40 cm par rapport au sol.

L'invention sera mieux comprise à la lecture de la description qui va suivre, donnée uniquement à titre d'exemple et faite en se référant aux dessins dans lesquels :
- la figure 1 est une vue en coupe, dans un plan longitudinal du véhicule automobile, d'un véhicule automobile comprenant un ensemble d'une poutre de choc et d'un absorbeur selon un premier mode de réalisation de l'invention et d'une barrière de test déformable de chocs à basse vitesse;
- la figure 2 est une vue analogue à la figure 1 d'un véhicule automobile comprenant un ensemble d'une poutre de choc et d'un absorbeur selon un deuxième mode de réalisation de l'invention;
- la figure 3 est une vue en coupe dans un plan longitudinal du véhicule automobile d'un ensemble d'une poutre de choc et d'un absorbeur selon un troisième mode de réalisation de l'invention ;
- la figure 4 est une vue en perspective de l'absorbeur de la figure 3 ;
- la figure 5 est une vue en coupe de l'absorbeur selon l'invention selon la ligne III-III de la figure 4 ;
- la figure 6 est une vue en coupe de l'absorbeur selon l'invention selon la ligne IV-IV de la figure 4 ;
- la figure 7 est une vue en coupe de l'absorbeur selon l'invention selon la ligne V-V de la figure 4.

Sur les figures, on a représenté des axes X, Y, Z orthogonaux entre eux correspondant aux orientations habituelles longitudinale (X), transversale (Y) et verticale (Z) d'un véhicule.

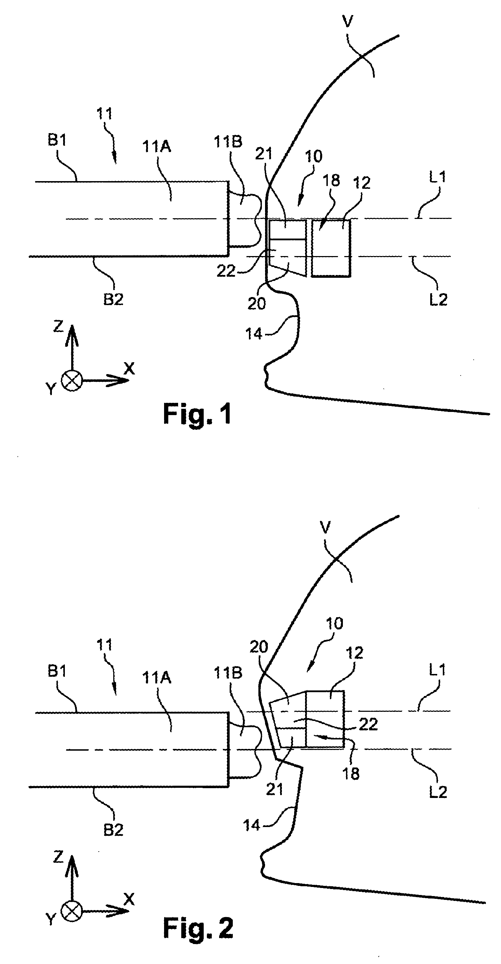

On a représenté sur la figure 1 un absorbeur de choc avant selon un premier mode de réalisation de l'invention désigné par la référence générale 10. L'absorbeur 10 est réalisé par injection de matière plastique, de préférence en polypropylène ou en polyéthylène et en mousse.

On a également représenté sur la figure 1 une barrière 11 d'un test d'absorption de chocs normalisé à basse vitesse du type de celui utilisé pour le test IIHS. La barrière 11 comprend une partie rigide 11A et une partie déformable 11 B, agencée en avant de la partie rigide 11A de façon à venir heurter en premier le véhicule lors du test d'absorption. Par ailleurs, la barrière 11 s'étend verticalement entre des bords haut B1 et bas B2 définissant la hauteur de la barrière 11 dans la direction Z.

On notera que les dimensions de la barrière 11 sont standardisées, en fonction du teste d'absorption de chocs considéré.

L'absorbeur 10 est destiné à être monté sur un véhicule automobile V. Dans l'exemple illustré le véhicule automobile V comprend une poutre de choc 12. L'absorbeur 10 est monté au droit de la poutre de choc 12. On entend par poutre de chocs une structure rigide capable d'absorber de l'énergie pour se déformer. Généralement, une telle poutre de chocs est fixée à la caisse en blanc du véhicule, notamment à des longerons.

Le véhicule comprend également une peau 14 de pare chocs destinée à être visible depuis l'extérieur du véhicule derrière laquelle est directement agencée l'absorbeur 12.

L'absorbeur 10 comprend une zone 18, dite de recouvrement, d'absorption d'énergie d'un choc destinée à être en regard de la barrière 11. Cette zone 18 est délimitée par des limites supérieure L1 et inférieure L2, matérialisées par les pointillées sur la figure 1.

L'absorbeur 10 comprend également une zone 20, dite complémentaire, d'absorption d'énergie du choc destinée à ne pas être en regard de la barrière 11.

Dans l'exemple représenté, les zones de recouvrement 18 et complémentaire 20 sont adjacentes et séparées par la limite inférieure L2 de la zone de recouvrement 18. On notera que, dans l'exemple de la figure 1, la limite inférieure L2 est située dans un même plan que le bord bas B2 de la barrière 11.

En l'espèce, la zone 20 n'est pas destinée à venir directement en contact avec la barrière 11. La zone de recouvrement 18 comprend deux moitiés 21, 22 selon la direction verticale Z. La moitié 21, la moitié 22 et la zone complémentaire 20 sont disposées dans cet ordre successivement selon la direction verticale Z du véhicule automobile, la zone 20 étant la plus basse. La moitié 22 est intercalée entre la zone complémentaire et la moitié 21 lorsque l'absorbeur 12 est monté sur le véhicule automobile.

L'absorbeur 10 est monté sur le véhicule V de sorte que la limite inférieure L2 de la zone de recouvrement 18 est située à une hauteur supérieure ou égale à 40 cm par rapport au sol.

Conformément à ce mode de réalisation, la moitié 22, qui est délimitée par la limite inférieure L2, est la moitié la plus proche verticalement d'un bord haut ou bas de la barrière 11. En effet, cette moitié 22 est plus proche verticalement du bord bas B2 que la moitié 21 ne l'est du bord haut 21.

Dans ce cas, conformément à l'invention, la raideur moyenne de la moitié 21 selon une direction sensiblement longitudinale du véhicule est supérieure à la raideur moyenne de l'autre moitié 22 selon cette direction longitudinale.

On a représenté sur la figure 2 un absorbeur de choc avant selon un deuxième mode de réalisation de l'invention. Les éléments analogues à ceux du premier mode de réalisation sont désignés par des références identiques. Tous les éléments des autre modes présentés, même s'il ne sont pas désignés ou représentés, sont également présents *mutatis mutandis* dans ce deuxième mode de réalisation.

Dans ce mode de réalisation, la moitié 21, la moitié 22 et la zone complémentaire 20 sont disposées dans cet ordre successivement selon la direction verticale Z du véhicule automobile, la zone 20 étant la plus haute. La moitié 22 est intercalée entre la zone complémentaire 20 et la moitié 21 lorsque l'absorbeur 12 est monté sur le véhicule automobile.

Conformément à ce mode de réalisation, la moitié 22, qui est délimitée par la limite supérieure L1, est la moitié la plus proche verticalement d'un bord haut ou bas de la barrière 11. En effet, cette moitié 22 est plus proche verticalement du bord haut B1 que la moitié 21 ne l'est du bord bas 22.

Dans ce cas, conformément à l'invention, la raideur moyenne de la moitié 21 selon une direction sensiblement longitudinale du véhicule est supérieure à la raideur moyenne de l'autre moitié 22 selon cette direction longitudinale.

Par ailleurs, conformément à ce mode de réalisation, la moitié 22 de raideur moyenne la plus faible est proéminente vers l'avant du véhicule par rapport à la moitié 21 de raideur moyenne la plus élevée.

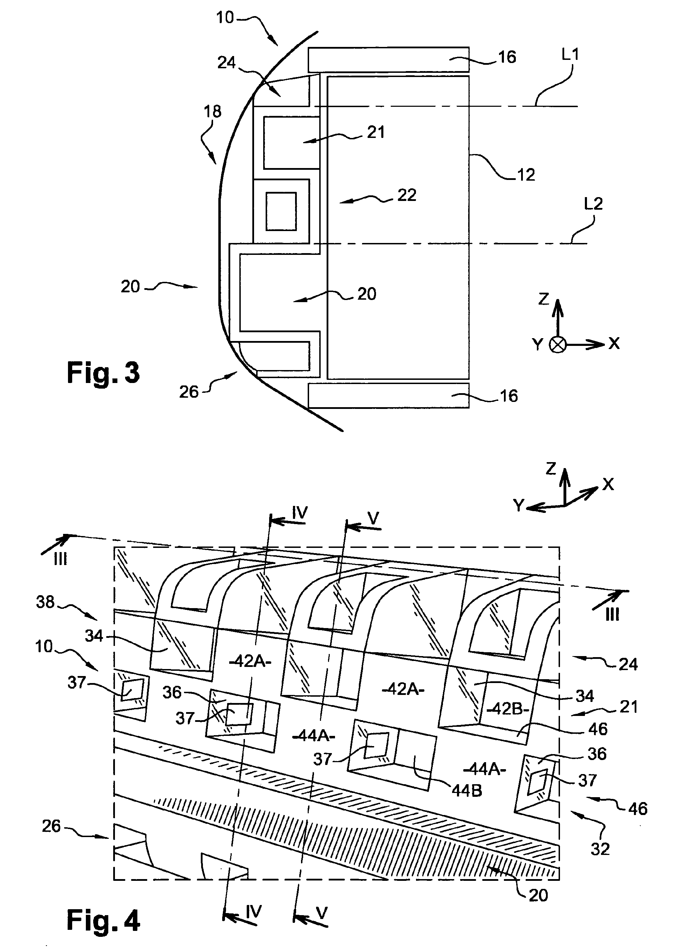

On a représenté sur les figures 3 à 7 un absorbeur selon un troisième mode de réalisation de l'invention. Les éléments analogues à ceux des modes de réalisation précédents sont désignés par des références identiques. Tous les éléments des modes précédents, même s'il ne sont pas désignés ou représentés, sont également présents *mutatis mutandis* dans ce troisième mode de réalisation.

Dans ce mode de réalisation, le véhicule V automobile comprend également des moyens 16 de maintien vertical conjointement de la poutre 12 et de l'absorbeur 10. Les moyens 16 permettent également le guidage de la poutre 12 et de l'absorbeur 10 selon la direction longitudinale lors d'un choc.

L'absorbeur 10 comprend également des zones supérieures et inférieures 24, 26 d'appui de la peau de pare choc 14. La zone supérieure 24 est située au dessus de la zone de recouvrement 18 et la zone inférieure 26 est située au dessous de la zone complémentaire 20.

On a représenté sur les figures 4 à 7 l'absorbeur 10 selon l'invention.

Chaque moitié 21, 22 comporte respectivement des parois 34, 36 formant nervures. Les nervures 34, 36 sont aptes à absorber l'énergie d'un choc selon la direction longitudinale X lorsque l'absorbeur 10 est monté sur le véhicule. Les parois 34, 36 sont sensiblement perpendiculaires à la direction transversale Y et sont ainsi aptes à flamber sous l'effet d'un choc.

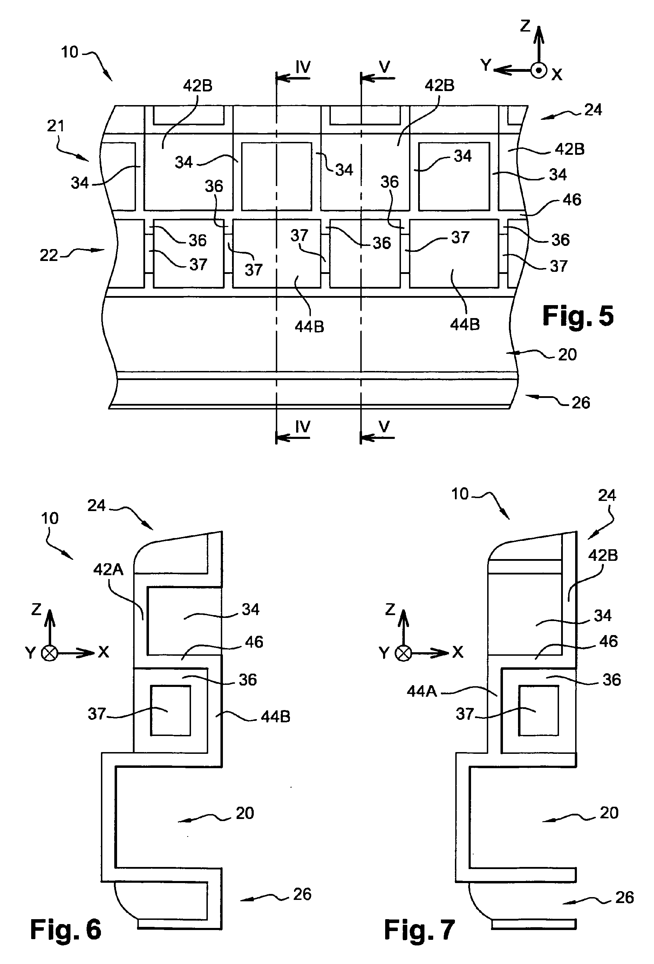

Comme représenté sur la figure 5, les parois 34, 36 ont toutes la même épaisseur.

La raideur moyenne de la moitié 21 selon une direction sensiblement longitudinale du véhicule est supérieure à la raideur moyenne de la moitié 22 selon cette direction longitudinale.

En l'espèce, chaque paroi 36 comporte un orifice 37. Chaque orifice 37 a une section de forme carrée. En variante, chaque orifice 37 pourra avoir une section de forme polygonale, circulaire, ovoïde.

Les parois 34 définissent un réseau 38 de parois. Le réseau 38 de parois 34 est périodique selon la direction transversale Y. En l'espèce, Les parois 34 sont sensiblement équidistantes les unes des autres.

De façon analogue, les parois 36 définissent également un réseau 40 de parois 36. Le réseau 40 est également périodique selon la direction transversale Y et les parois 36 sont sensiblement équidistantes les unes des autres.

Dans l'exemple illustré, la périodicité selon la direction transversale Y du réseau 38 est identique à la périodicité selon la direction transversale Y du réseau 40.

Comme illustré sur les figures 4, 6 et 7, deux parois successives 34 de la moitié 21 de l'absorbeur 10 sont reliées entre elles par une paroi 42, dite transversale, sensiblement perpendiculaire à la direction longitudinale X. Les parois successives 42 comprennent des parois 42A, dites de front, et des parois 42B, dites de fond. Les parois de front 42A sont destinées à venir au contact de la peau 14, notamment sous l'effet du choc et les parois de fond 42B sont destinées à venir au contact de la poutre de choc 12, notamment sous l'effet du choc. Les parois de front 42A sont décalées par rapport aux parois de fond 42B selon la direction longitudinale X du véhicule de sorte qu'une paroi de front 42A alterne avec une paroi de fond 42B.

De façon analogue, deux parois successives 36 de la moitié 22 de l'absorbeur 10 sont reliées entre elles par une paroi transversale 44 sensiblement perpendiculaire à la direction longitudinale X. Les parois transversales 44 comprennent des parois de front 44A et des parois de fond 44B. Les parois 44A, 44B sont également décalées les unes par rapport aux autres de sorte qu'une paroi de front 44A alterne avec une paroi de fond 44B.

Ainsi, en référence à la figure 4, les parois de front 42A, 44A et de fond 42B, 44B sont agencées en damier lorsqu'on regarde l'absorbeur 10 selon la direction longitudinale Y.

Sous l'effet d'un choc, les moitiés 21, 22 sont agencées de façon à dissocier la déformation selon la direction longitudinale X de chaque moitié 21, 22 l'une par rapport à l'autre. En l'espèce, les moitiés 21, 22 sont séparées verticalement par une paroi 46 de dissociation de la compression des première et deuxième zones 18, 20. La paroi 46 est apte à dissocier la déformation des parois 34 de la moitié 21 de la déformation des parois 36 de la moitié 22. La paroi 46 est sensiblement perpendiculaire à la direction verticale Z et s'étend selon une direction sensiblement parallèle à la direction transversale Y. La paroi 46 s'étend continûment transversalement sur au moins trois quart de la dimension transversale de l'absorbeur 10. En l'espèce, la paroi 46 s'étend sur l'intégralité de la dimension transversale de l'absorbeur 10.

La zone complémentaire d'absorption 20 présente une section transversale en U et est proéminente vers l'avant du véhicule par rapport aux moitiés 21, 22 de la zone de recouvrement 18.

L'absorbeur 10 permet la mise en oeuvre d'un procédé de test d'absorption de chocs à basse vitesse à l'égard de la barrière 11 comme cela est représenté notamment sur les figures 1 et 2. La zone 18 de recouvrement est en regard de la barrière 11. La barrière 11 et le véhicule V sont alors déplacés l'un vers l'autre pour simuler un choc à basse vitesse. L'invention ne se limite pas au mode de réalisation précédemment décrit.

En effet, dans un mode de réalisation non représenté, chaque paroi 36 présente une dimension selon la direction verticale Z supérieure à la dimension des parois 34 selon cette direction verticale Z de sorte que la raideur moyenne selon la direction longitudinale X de chaque paroi 34 est supérieure à la raideur moyenne selon la direction longitudinale X de chaque paroi 36.

Les parois 34, 36 formant nervures pourront définir des réseaux 38, 40 autres que ceux précédemment décrits. Ainsi, par exemple, les parois 34, 36 pourront définir des réseaux 38, 40 de parois en nid d'abeille.

De plus, les parois 34 pourront avoir une épaisseur différente, de celle des parois 36. En particulier, les parois 34 pourront avoir une épaisseur supérieure à celle des parois 36.

De plus, les caractéristiques de l'absorbeur 10 selon l'invention pourront s'appliquer sur tout ou partie de l'absorbeur 10. De préférence, ces caractéristiques sont présentes sur une longueur d'au moins 200 mm de l'absorbeur selon la direction transversale. Cette partie d'une longueur d'au moins 200 mm pourra être située en partie centrale, c'est-à-dire centrée par rapport à un plan vertical médian du véhicule automobile. Cette partie pourra également être située en partie latérale de l'absorbeur, c'est-à-dire à proximité des zones destinées à former des zones d'impact de chocs en coins.

On notera que l'invention n'est pas limitée aux modes de réalisation décrits précédemment. En effet, certaines caractéristiques d'un mode de réalisation pourraient notamment être reportées sur un autre mode de réalisation sans sortir du cadre des revendications.

## Revendications

1. Absorbeur (10) de chocs en matière plastique pour véhicule automobile dans lequel, lorsque l'absorbeur (10) est monté sur le véhicule :
- l'absorbeur (10) comprend une zone (18), dite de recouvrement, d'absorption d'énergie d'un choc comprenant deux moitiés (21, 22), et
- chaque moitié (21, 22) comporte au moins une paroi (34, 36) formant nervure apte à absorber l'énergie du choc selon une direction longitudinale lorsque l'absorbeur (10) est monté sur le véhicule.
- deux parois (34, 36) formant nervures successives selon la direction transversale du véhicule sont reliées entre elles par une paroi transversale (42, 44), et au moins deux parois transversales successives, dites de front (42A, 44A) et de fond (42B, 44B), sont décalées l'une par rapport à l'autre selon la direction longitudinale du véhicule de sorte qu'une paroi de front (42A, 44A) alterne avec une paroi de fond (42B, 44B) selon la direction transversale.
**caractérisé en ce que** la raideur moyenne d'une moitié (21) selon une direction sensiblement longitudinale du véhicule est supérieure à la raideur moyenne de l'autre moitié (22) selon cette direction et **en ce que** les parois de front (42A, 44A) et de fond (42B, 44B) des moitiés (21, 22) sont agencées en damier lorsqu'on regarde l'absorbeur (10) selon une direction longitudinale du véhicule.

2. Absorbeur (10) selon la revendication 1, dans lequel la moitié (22) de raideur moyenne la plus faible est proéminente vers l'avant du véhicule par rapport à la moitié (21) de raideur moyenne la plus élevée.

3. Absorbeur (10) selon la revendication 1 ou 2, comprenant une zone (20), dite complémentaire, d'absorption d'énergie du choc frontal proéminente vers l'avant du véhicule par rapport à au moins une des moitiés (21, 22) de la zone de recouvrement (18).

4. Absorbeur (10) selon l'une quelconque des revendications précédentes, dans lequel les moitiés (21, 22) sont agencées de façon à dissocier la déformation de chaque moitié (21, 22) selon la direction longitudinale l'une par rapport à l'autre sous l'effet d'un choc.

5. Absorbeur (10) selon l'une quelconque des revendications précédentes, dans lequel les moitiés sont séparées par une paroi (46) de dissociation, destinés à dissocier la déformation de chaque moitié (21, 22) sous l'effet du choc, la paroi (46) s'étendant selon une direction sensiblement transversale du véhicule lorsque l'absorbeur (10) est monté sur le véhicule.

6. Absorbeur (10) selon l'une quelconque des revendications précédentes, dans lequel la paroi formant nervure (36) de la moitié (22) de raideur moyenne la plus faible présente une dimension selon la direction verticale supérieure à celle de la paroi (34) formant nervure de la moitié (21) de raideur moyenne la plus élevée.

7. Absorbeur (10) selon l'une quelconque des revendications précédentes, dans lequel la paroi formant nervure (36) de la moitié (22) de raideur moyenne la plus faible comporte au moins un orifice (37) ménagé dans cette paroi (36).

8. Absorbeur (10) selon l'une quelconque des revendications précédentes, dans lequel au moins une moitié (21, 22) comporte plusieurs parois (34, 36) formant nervures définissant un réseau (38, 40) de parois périodique selon la direction transversale du véhicule.

9. Absorbeur (10) selon l'une quelconque des revendications précédentes, dans lequel les deux moitiés (21, 22) comportent plusieurs parois (34, 36) formant nervures définissant deux réseaux (38, 40) de parois périodique selon la direction transversale du véhicule, la périodicité des réseaux (38, 40) des deux moitiés (21, 22) étant de préférence sensiblement identique.

10. Véhicule automobile **caractérisé en ce qu'**il comprend un absorbeur (10) selon l'une quelconque des revendications précédentes.

11. Véhicule selon la revendication 10, dans lequel, la zone de recouvrement s'étendant verticalement entre des limites supérieure et inférieure, l'absorbeur (10) est monté sur le véhicule de sorte que la limite inférieure de la zone de recouvrement (18) est située à une hauteur supérieure ou égale à 40 cm par rapport au sol.

## Claims

1. An impact absorber (10) made of plastics material for a motor vehicle, wherein, when the absorber (10) is mounted on the vehicle:
• the absorber (10) includes a so-called "overlap" zone (18) for absorbing energy of an impact, said zone comprising two halves (21, 22);
• each half (21, 22) includes at least one rib-forming wall (34, 36) forming a rib suitable for absorbing the energy of the impact in a longitudinal direction when the absorber (10) is mounted on the vehicle; and
• two rib-forming walls (34, 36) forming successive ribs in the transverse direction of the vehicle are connected together by a transverse wall (42, 44), and at least two successive transverse walls, including a "front" wall (42A, 44A) and a "rear" wall (42B, 44B), are offset relative to each other in the longitudinal direction of the vehicle so that a front wall (42A, 44A) alternates with a rear wall (42B, 44B) in the transverse direction;
the absorber being **characterized in that** the mean stiffness of one half (21) in a substantially longitudinal direction of the vehicle is greater than the mean stiffness of the other half (22) in said direction, and **in that** the front and rear walls (42A, 44A; 42B, 44B) of the halves (21, 22) are arranged in a checkerboard pattern when the absorber (10) is viewed in a longitudinal direction of the vehicle.

2. An absorber (10) according to claim 1, wherein the half (22) of smaller mean stiffness projects towards the front of the vehicle relative to the half (21) of greater mean stiffness.

3. An absorber (10) according to claim 1 or claim 2, including an "additional" zone (20) for absorbing energy of the projecting front impact towards the front of the vehicle relative to at least one of the halves (21, 22) of the overlap zone (18).

4. An absorber (10) according to any preceding claim, wherein the halves (21, 22) are arranged in such a manner as to dissociate the deformation of each half (21, 22) in the longitudinal direction relative to the other half under the effect of an impact.

5. An absorber (10) according to any preceding claim, wherein the halves are separated by a dissociation wall (46) for dissociating the deformation of each half (21, 22) under the effect of the impact, the wall (46) extending in a substantially transverse direction of the vehicle when the absorber (10) is mounted on the vehicle.

6. An absorber (10) according to any preceding claim, wherein the rib-forming wall (36) of the half (22) of lower mean stiffness presents a dimension in the vertical direction that is greater than the corresponding dimension of the rib-forming wall (34) of the half (21) of greater mean stiffness.

7. An absorber (10) according to any preceding claim, wherein the rib-forming wall (36) of the half (22) of lower mean stiffness includes at least one orifice (37) formed in said wall (36).

8. An absorber (10) according to any preceding claim, wherein at least one half (21, 22) includes a plurality of rib-forming walls (34, 36) defining an array (38, 40) of walls that is periodic in the transverse direction of the vehicle.

9. An absorber (10) according to any preceding claim, wherein both halves (21, 22) include respective pluralities of rib-forming walls (34, 36) defining two arrays (38, 40) of walls that are periodic in the transverse direction of the vehicle, the periodicity of the arrays (38, 40) of the two halves (21, 22) preferably being identical.

10. A motor vehicle, **characterized in that** it includes an absorber (10) according to any preceding claim.

11. A vehicle according to claim 10, wherein the overlap zone extends vertically between top and bottom limits, and the absorber (10) is mounted on the vehicle in such a manner that the bottom limit of the overlap zone (18) is situated at a height that is greater than or equal to 40 cm relative to the ground.

## Patentansprüche

1. Stoßabsorber (10) aus Plastik für ein Kraftfahrzeug, bei dem, wenn der Absorber (10) auf das Kraftfahrzeug montiert ist:
- der Absorber (10) eine Zone (18), Abdeckzone genannt, zum Absorbieren von Energie eines Stoßes aufweist bestehend aus zwei Hälften (21, 22), und
- jede Hälfte (21, 22) mindestens eine Wand (34, 36) aufweist, die eine Rippe bildet, die die Energie des Stoßes entlang einer Längsrichtung absorbieren kann, wenn der Absorber (10) am Fahrzeug montiert ist,
- zwei Wände (34, 36), die aufeinander folgende Rippen entlang der Querrichtung des Fahrzeugs bilden, miteinander durch eine Querwand (42, 44) verbunden sind, und mindestens zwei aufeinander folgende Querwände, Vorderwand (42A, 44A) und Rückwand (42B, 44B) genannt, zueinander entlang der Längsrichtung des Fahrzeugs derart versetzt sind, dass eine Vorderwand (42A, 44A) mit einer Rückwand (42B, 44B) entlang der Querrichtung abwechselt,
**dadurch gekennzeichnet, dass** die mittlere Steifigkeit einer Hälfte (21) entlang einer Richtung im Wesentlichen längs des Fahrzeugs größer ist als die mittlere Steifigkeit der anderen Hälfte (22) entlang dieser Richtung, und dass die Vorderwand (42A, 44A) und Rückwand (42B, 44B) der Hälften (21, 22) schachbrettartig angeordnet sind, wenn man den Absorber (10) entlang einer Längsrichtung des Fahrzeugs betrachtet.

2. Absorber (10) nach Anspruch 1, bei dem die Hälfte (22) mit der geringsten mittleren Steifigkeit zur Vorderseite des Fahrzeugs in Bezug zu der Hälfte (21) mit höchster mittlerer Steifigkeit vorsteht.

3. Absorber (10) nach Anspruch 1 oder 2, der eine Zone (20), komplementäre Zone genannt, zur Absorption von Energie des Frontalstoßes aufweist, die zur Vorderseite des Fahrzeugs in Bezug zu mindestens einer der Hälften (21, 22) der Abdeckzone (18) vorsteht.

4. Absorber (10) nach einem der vorhergehenden Ansprüche, bei dem die Hälften (21, 22) derart eingerichtet sind, dass die Verformung jeder Hälfte (21, 22) entlang der Längsrichtung zu einander unter der Einwirkung eines Stoßes getrennt wird.

5. Absorber (10) nach einem der vorhergehenden Ansprüche, bei dem die Hälften durch eine Trennwand (46) getrennt sind, die dazu bestimmt ist, die Verformung jeder Hälfte (21, 22) unter der Einwirkung des Stoßes zu trennen, wobei sich die Wand (46) entlang einer Richtung im Wesentlichen quer zum Fahrzeug erstreckt, wenn der Absorber (10) am Fahrzeug montiert ist.

6. Absorber (10) nach einem der vorhergehenden Ansprüche, bei dem die Wand, die eine Rippe (36) der Hälfte (22) mit niedrigerer mittlerer Steifigkeit bildet, ein Maß entlang der vertikalen Richtung aufweist, das größer ist als das der Wand (34), die eine Rippe der Hälfte (21) mit höherer mittlerer Steifigkeit bildet.

7. Absorber (10) nach einem der vorhergehenden Ansprüche, bei dem die Wand, die eine Rippe (36) der Hälfte (22) mit niedrigerer mittlerer Steifigkeit bildet, mindestens eine Öffnung (37) aufweist, die in dieser Wand (36) eingerichtet ist.

8. Absorber (10) nach einem der vorhergehenden Ansprüche, bei dem mindestens eine Hälfte (21, 22) mehrere Wände (34, 36) aufweist, die Rippen bilden, ein Netz (38, 40) aus periodische Wänden entlang der Querrichtung des Fahrzeugs definieren.

9. Absorber (10) nach einem der vorhergehenden Ansprüche, bei dem die zwei Hälften (21, 22) mehrere Wände (34, 36) aufweisen, die Rippen bilden, die zwei Netze (38, 40) periodischer Wände entlang der Querrichtung des Fahrzeugs definieren, wobei die Periodizität der Netze (38, 40) der zwei Hälften (21, 22) vorzugsweise im Wesentlichen identisch ist.

10. Kraftfahrzeug, **dadurch gekennzeichnet, dass** es einen Absorber (10) nach einem der vorhergehenden Ansprüche aufweist.

11. Kraftfahrzeug nach Anspruch 10, bei dem der Absorber (10) bei sich vertikal zwischen dem oberen und dem unteren Ende erstreckender Abdeckzone derart am Fahrzeug montiert ist, dass das untere Limit der Abdeckzone (18) in einer Höhe größer oder gleich 40 cm vom Boden liegt.
